# EUROPEAN PATENT SPECIFICATION

(11) **EP 1 958 277 B1**
(45) Date of publication and mention of the grant of the patent: **23.04.2014**
(21) Application number: 06823928.4
(22) Date of filing: 06.12.2006
(51) Int. Cl.: H01M 4/62, H01M 10/42, H01M 10/052, H01M 4/13, H01M 4/131, H01M 4/133

(54) **ELECTRODE WITH ENHANCED SAFETY AND ELECTROCHEMICAL DEVICE HAVING THE SAME**
ELEKTRODE MIT VERBESSERTER SICHERHEIT UND ELEKTROCHEMISCHE EINRICHTUNG DAMIT
ELECTRODE A SECURITE RENFORCEE ET DISPOSITIF ELECTROCHIMIQUE EQUIPE D'UNE TELLE ELECTRODE

(30) Priority: 06.12.2005 KR 20050118327
(43) Date of publication of application: 20.08.2008
(73) Proprietor: LG CHEM, LTD., Seoul 150-721 (KR)
(72) Inventor: LEE, Sang-Young, Daejeon 305-761 (KR); SEO, Dae-Jong, Seoul 150-721 (KR); SOHN, Joon-Yong, Busan 614-111 (KR); KIM, Seok-Koo, Daejeon 305-308 (KR); HONG, Jang-Hyuk, Daejeon 302-222 (KR); KIM, Young-Soo, Gyeongsangnam-do 626-110 (KR); JANG, Hyun-Min, Daejeon 305-340 (KR)
(74) Representative: HOFFMANN EITLE
(86) International application number: PCT/KR2006/005221
(87) International publication number: WO 2007/066966

(56) References cited:
- WO-A1-2005/067080
- WO-A1-2005/076388
- KR-A- 20030 007 659
- KR-A- 20040 005 550
- KR-A- 20040 015 999
- KR-A- 20050 038 254

## Description

### TECHNICAL FIELD

The present invention relates an electrode used for an electrochemical device such as a lithium secondary battery and an electrochemical device having the same, and more particularly to an electrode used for an electrochemical device capable of improving safety of a battery and also minimizing reduction in capacity of a battery by preventing internal short circuit caused by the contact between both electrodes, and an electrochemical device having the same.

### BACKGROUND ART

Recently, there has been an increasing interest in energy storage technology. Batteries have been widely used as energy sources in the fields of cellular phones, camcorders, notebook computers, PCs and electric cars, resulting in intensive research and development into them. In this regard, electrochemical devices are one of the subjects of great interest. Particularly, development of rechargeable secondary batteries has been the focus of attention. Recently, the research and development into a novel electrode and a novel battery that can improve capacity density and specific energy have been made intensively in the field of the secondary batteries.

Among currently used secondary batteries, lithium secondary batteries developed in early 1990's have a higher drive voltage and a much higher energy density than those of conventional batteries using an aqueous electrolyte solution (such as Ni-MH batteries, Ni-Cd batteries, H₂SO₄-Pb batteries, etc). For these reasons, the lithium secondary batteries have been advantageously used. However, such a lithium secondary battery has disadvantages in that organic electrolytes used therein may cause safety-related problems resulting in ignition and explosion of the batteries and that processes for manufacturing such a battery are complicated.

Recently, lithium-ion polymer batteries have been considered as one of the next-generation batteries since the above disadvantages of the lithium ion batteries were solved. However, the lithium-ion polymer batteries have a relatively lower battery capacity than those of the lithium ion batteries and an insufficient discharging capacity in low temperature, and therefore these disadvantages of the lithium-ion polymer batteries remain to be urgently solved.

Such a battery has been produced from many companies, and the battery stability has different phases in the lithium-ion polymer batteries. Accordingly, it is important to evaluate and ensure the stability of the lithium-ion polymer batteries. First of all, it should be considered that errors in operation of the batteries should not cause damage to users. For this purpose, the Safety and Regulation strictly regulate the ignition and the explosion in the batteries.

Lithium secondary batteries may explode with excessive heat if short circuit is caused due to the contact between a cathode and an anode. A collector is intermittently coated with an electrode active material. At this time, problems of thickness variation and poor adhesion are caused in boundary regions of the intermittently pattern-coated electrodes. Accordingly, a process for attaching a tape to the boundary region of the intermittent coating has been used to prevent short circuit in the boundary region of the intermittent coating. However, reduction in the capacity of a battery is inevitably caused because a thickness of the taped region increases locally and the taped region becomes a kind of dead space due to impossibility of conducting lithium ions. Also, the presence of the non-coated regions of the intermittently pattern-coated electrodes may reduce capacity of the battery, and the contact between the non-coated regions may cause the internal short circuit.

WO-A-2005/067080 discloses a lithium ion secondary cell comprising a positive electrode having a core member, a negative electrode having a core member, a nonaqueous electrolyte, and a porous electron-insulating layer and a separator interposed between the positive and negative electrodes. The porous electron-insulating layer contains an inorganic oxide filler and a binder, and the porous electron-insulating layer is coated on the core member of the positive/negative electrode or on an electrode mix layer coated on the core member.

WO-A-2005/076388 discloses an electrode having an organic or inorganic composite porous coating layer on its surface, the coating layer comprising inorganic particles and a binder polymer. Micropores exist upon the inorganic particles.

### DISCLOSURE OF INVENTION

The present invention is designed to solve the problems of the prior art, and therefore the first object of the invention is to provide an electrode capable of improving safety of a battery and also minimizing reduction in capacity of a battery by preventing internal short circuit caused due to the presence of a weak region vulnerable to internal short circuit, and an electrochemical device having the same.

An embodiment of the invention is a lithium secondary battery comprising a cathode, an anode and an electrolyte, wherein the cathode, the anode or both electrodes comprise(s) a current collector intermittently pattern-coated with an electrode active material, and non-coated regions and boundary regions of the intermittently pattern-coated electrode(s) are coated with a porous active layer comprising a mixture of inorganic particles having a diameter of 0.001 to 10 µm and a binder polymer;
characterised in that the porous active layer has a heterogeneous composition morphology in the thickness direction such that the ratio of the binder polymer content to the inorganic particles content in a surface region of the porous active layer is higher than that inside the porous active layer beneath the surface region.

The binder polymer preferably interconnects and fixes the inorganic particles and pores are formed in the porous active layer due to the presence of interstitial volumes among the inorganic particles.

In the porous active layer, the inorganic particles are preferably selected from the group consisting of (a) inorganic particles having a dielectric constant of 5 or more, (b) inorganic particles having lithium ion conductivity, and (c) a mixture thereof.

The porous active layer shows heterogeneity of composition morphology toward a thickness direction in which a content ratio of the binder polymer/inorganic particles present in a surface region of the porous active layer is higher than that of the binder polymer/inorganic particles present inside the porous active layer. The heterogeneity of morphology toward a thickness direction may enhance the peeling and scratch resistance of the porous active layer and improve lamination to a conventional separator. Accordingly, stability and performance of the battery can be all improved together since the detachment of inorganic particles from the porous active layer may be reduced in the assembly process of the electrochemical device.

### BRIEF DESCRIPTION OF THE DRAWINGS

These and other features, aspects, and advantages of preferred embodiments of the present invention will be more fully described in the following detailed description, taken accompanying drawings. In the drawings:

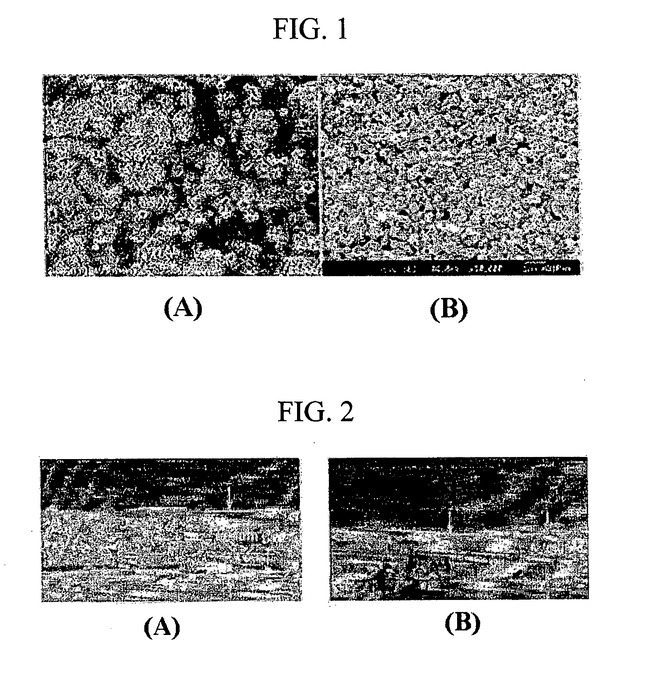

FIG. 1 is a photograph, taken by a scanning electron microscope (SEM), showing the porous active layer according to the present invention. Here, FIG. 1A is a magnified photograph showing a surface of the porous active layer having heterogeneity of morphology toward a thickness direction prepared in Example 2, and FIG. 1B is a magnified photograph showing a surface of a conventional porous active layer.
FIG. 2 is a photograph, taken by a scanning electron microscope (SEM), showing the porous active layer according to the present invention. Here, FIG. 2A is a magnified photograph showing a cross section of the porous active layer as shown in FIG. 1A, and FIG. 2B is a magnified photograph showing a cross section of the porous active layer as shown in FIG. 1B.

### BEST MODES FOR CARRYING OUT THE INVENTION

Hereinafter, preferred embodiments of the present invention will be described in detail referring to the accompanying drawings. Prior to the description, it should be understood that the terms used in the specification and appended claims should not be construed as limited to general and dictionary meanings, but interpreted based on the meanings and concepts corresponding to technical aspects of the present invention on the basis of the principle that the inventor is allowed to define terms appropriately for the best explanation.

The present invention is characterized in that weak regions vulnerable to electrical short circuit between the electrodes, that is, non-coated regions of the electrode(s) and boundary regions of the intermittently pattern-coated electrode(s) are coated with a porous active layer, wherein the weak regions vulnerable to electrical short circuit may be internally shortcut due to the contact between both electrodes and the electrode active material patterns are formed by coating with the electrode active material.
1) When the above-mentioned weak regions vulnerable to electrical short circuit between the electrodes are accidently in contact with each other possibly due to the poor assembly, the porous active layer formed on the electrodes of the present invention may prevent complete short circuit between both electrodes, and a short-circuited area may not be enlarged even if the short circuit is caused in the electrodes, resulting in improvement in safety of the battery.
2) Also, on contrary to the previous inventions describing tape attachment where the reduction in capacity of battery should not be unavoidable due to the presence of a dead space in the electrodes, the porous active layer may prevent reduction in capacity of the battery since pores formed in the inside of the porous active layer are filled with an electrolyte solution, and also minimize deterioration in the performances of a battery which may be caused by the introduction of the porous active layer. Particularly, the movement of the lithium ions is further facilitated by adjusting the kinds and content ratios of the binder polymer and the inorganic particles if the binder polymer interconnects and fixes the inorganic particles and the pores are formed in the porous active layer due to the presence of interstitial volumes among the inorganic particles. Actually, from Experimental examples of the present invention, it was confirmed that if a lithium secondary battery includes electrodes having a porous active layer introduced into weak regions vulnerable to short circuit between the electrodes, it improves safety of the battery by preventing internal short circuit caused by the contact between both electrodes, and also minimizes the reduction in the performances of the battery due to the introduction of the organic/inorganic active layer (see Table 1).

A weak region vulnerable to short circuit, onto which the porous active layer is introduced according to the present invention, includes a peripheral region of a collector in which electrode active materials are not applied; a non-coated region of the electrode such as a tap-attachment region; a boundary region of the electrode active material patterns formed by intermittently coating an electrode with the electrode active material. At this time, the boundary region of the intermittently pattern-coated electrodes refers to an edge region of an electrode intermittently coated with an electrode active material and arranged right before a region which is not coated with an electrode active material.

The above-mentioned region onto which the porous active layer is introduced is not limited to the electrode regions; the porous active layer may be formed on other regions inside an electrochemical device, for example on a battery case (façade materials), to provide the above-mentioned effects. At this time, there is no limitation in the shape and components of a case for device onto which the porous active layer may be introduced, and the case for device may be in a cylindrical shape using a can, a square shape, a pouch shape or coin shape, etc.

One of the maim components of the porous active layer including the above-mentioned electrode region according to the present invention is inorganic particles which is generally used in the art. The inorganic particles preferably serve to form micropores in interstitial volumes among the inorganic particles. Also, the inorganic particles also serve as a kind of a spacer that can keep a physical shape.

There is no particular limitation in selection of inorganic particles, as long as they are electrochemically stable. In other words, there is no particular limitation in inorganic particles that may be used in the present invention, as long as they are not subject to oxidation and/or reduction at the range of a drive voltage (for example, 0-5 V based on Li/Li+) of a battery to which they are applied. Particularly, it is preferred to use inorganic particles having ion conductivity as high as possible, because the inorganic particles can improve ion conductivity and performance in an electrochemical device. Additionally, if inorganic particles having high density are used, they face a difficulty in dispersion during a coating step and may increase the weight of a battery to be manufactured. Therefore, it is preferred to use inorganic particles having density as low as possible. Further, if inorganic particles having a high dielectric constant are used, they can contribute to increasing the dissociation degree of an electrolyte salt in a liquid electrolyte solution, such as a lithium salt, thereby improving the ion conductivity of the electrolyte.

For these reasons, it is preferred to use inorganic particles having a high dielectric constant of 5 or more, preferably 10 or more, inorganic particles having lithium ion conductivity, or mixtures thereof.

A particular non-limiting example of the inorganic particles having a dielectric constant of 5 or more include BaTiO₃, Pb(Zr,Ti)O₃ (PZT), Pb₁₋ₓLaₓZr_{1-y}Ti_{y}O₃ (PLZT), PB(Mg₃Nb_{2/3})O₃-PbTiO₃ (PMN-PT), hafnia (HfO₂), SrTiO₃, SnO₂, CeO₂, MgO, NiO, CaO, ZnO, ZrO₂, Y₂O₃, Al₂O₃, TiO₂, SiC, or mixtures thereof.

In particular, the inorganic particles, for example BaTiO₃, Pb(Zr,Ti)O₃ (PZT), Pb₁₋ₓLaₓZr_{1-y}Ti_{y}O₃ (PLZT), PB(Mg₃Nb_{2/3})O₃-PbTiO₃ (PMN-PT) and hafnia (HfO₂), have a high dielectric constant of 100 or more. The inorganic particles also have piezoelectricity so that an electric potential between both surfaces can be generated in the presence of the generated charges when pressure is applied over a critical level. Therefore, the inorganic particles can prevent internal short circuit between both electrodes, thereby contributing to improving the safety of a battery.

As used herein, "inorganic particles having lithium ion conductivity" are referred to as inorganic particles containing lithium ions and having a capability of transferring lithium ions without storing lithium. The inorganic particles having lithium ion conductivity can conduct and move lithium ions through structural defects inside the particles, and thus can improve lithium ion conductivity and contribute to improving battery performance. A non-limiting example of such inorganic particles having lithium ion conductivity includes: lithium phosphate (Li₃PO₄), lithium titanium phosphate (LiₓTi_{y} (PO₄)₃, 0 < x < 2, 0 < y < 3), lithium aluminum titanium phosphate (LiₓAl_{y}Ti_{z} (PO₄)₃, 0 < x < 2, 0 < y < 1, 0 < z < 3), (LiAlTiP)ₓO_{y} type glass (0 < x < 4,0 < y < 13) such as 14Li₂O-9Al₂O₃-38TiO₂-39P₂O₅, lithium lanthanum titanate (LiₓLa_{y}TiO₃, 0 < x < 2,0 < y < 3), lithium germanium thiophosphate (LiₓGe_{y}P_{z}S_{w}, 0 < x < 4,0 < y < 1,0 < z < 1,0 < w <5) such as Li_{3.25}Ge_{0.25}P_{0.75}S₄, lithium nitrides (LiₓN_{y}, 0 < x < 4, 0 < y < 2) such as Li₃N, SiS₂ type glass (LiₓSi_{y}S_{z}, 0 < x < 0 < y < 2, 0 < z < 4) such as Li₃PO₄-Li₂S-SiS₂, P₂S₅ type glass (LiₓP_{y}S_{z}, 0 < x < 3,0 < y < 3,0 < z < 7) such as LiI-Li₂-P₂S₅, or mixtures thereof.

Additionally, if the inorganic particles having a high dielectric constant are combined with the inorganic particles having lithium ion conductivity, synergic effects can be obtained.

The inorganic particles have a diameter of 0.001-10 *µ*m for the purpose of forming a coating layer having a uniform thickness and providing a suitable porosity. If the diameter is less than 0.001 *µ*m, physical properties of the porous active layer cannot be controlled with ease since the inorganic particles have poor dispersibility. If the diameter is greater than 10 *µ*m, the resultant porous active layer has an increasing thickness even if it is manufactured within the same solid content of the inorganic particles, resulting in degradation in mechanical properties. Furthermore, such excessively large pores may increase a possibility of generating internal short circuit during repeated charge/discharge cycles.

Another component of the porous active layer of the present invention introduced into the above-mentioned electrode region is a binder polymer currently used in the art. Particularly, the used binder polymer has a glass transition temperature (Tg) as low as possible, and preferably T_{g} of -200 to 200 °C. The binder polymers having a low Tg as described above are preferred because they can improve mechanical properties such as flexibility and elasticity of a final coating layer. The polymer satisfactorily serves as a binder for interconnecting and stably fixing inorganic particles, thereby preventing degradation in the mechanical properties of the electrode including a porous active layer.

Also, it is not essential to use a binder polymer having ion conductivity. However, if the binder polymer having ion conductivity is used, it can further contribute to improving performance of an electrochemical device. Therefore, the binder polymer preferably has a dielectric constant as high as possible. Because the dissociation degree of a salt in an electrolyte solution depends on the dielectric constant of a solvent in the electrolyte solution, the binder polymer having an increasing dielectric constant can actually increase the dissociation degree of a salt in the electrolyte used in the present invention. The dielectric constant of the polymer may range from 1.0 to 100 (as measured at a frequency of 1 kHz), and is preferably 10 or more.

In addition to the above-mentioned functions, the binder polymer according to the present invention may be further characterized in that it can be gelled when swelled with a liquid electrolyte, thereby to shows a high degree of swelling. Therefore, it is preferred to use a binder polymer having a solubility parameter of 15 to 45 MPa^{1/2}, and more preferably a solubility parameter of 15 to 25 MPa^{1/2} and 30 to 45 MPa^{1/2}. Accordingly, hydrophilic polymers having a large number of polar groups are more advisable as the binder polymer compared to hydrophobic polymers such as polyolefin polymers. The binder polymer cannot be swelled sufficiently in a conventional electrolyte solution for a battery if the solubility parameter of the binder polymer is less than 15 MPa^{1/2} or greater than 45 MPa^{1/2}.

A non-limiting example of the binder polymer includes polyvinylidene fluoride-co-hexafluoropropylene, polyvinylidene fluoride-co-trichloroethylene, polymethylmethacrylate, polyacrylonitrile, polyvinylpyrrolidone, polyvinylacetate, polyethylene-co-vinyl acetate, polyimide, polyethylene oxide, cellulose acetate, cellulose acetate butyrate, cellulose acetate propionate, pullulan, carboxyl methyl cellulose, polyvinylalcohol, cyanoethylpullulan, cyanoethylpolyvinylalcohol, cyanoethylcellulose, cyanoethylsucrose or mixtures thereof.

There is no particular limitation in the above mixing ratio of inorganic particles to a binder polymer. However, the mixing ratio of inorganic particles to a polymer preferably ranges from 10: 90 to 99: 1, and more preferably ranges from 50: 50 to 99: 1.

If the content of the inorganic particles is less than 10 parts by weight, interstitial volumes formed among inorganic particles may be decreased due to the presence of an excessively large amount of the polymer, thereby reducing the pore size and porosity of a coating layer, resulting in degradation in battery performance. If the content of the inorganic particles is greater than 99 parts by weight, an excessively low content of the polymer may cause the adhesion among inorganic particles to be weakened, resulting in degradation in mechanical properties of the electrode including a porous active layer.

There is no particular limitation in thickness of the active layer including the inorganic particles and the binder polymer, but the active layer preferably has a thickness of 0.001 and 100 *µ*m. Also, there are no particular limitations in area including the porous active layer, but the area is preferably 1nm² or more. There are no particular limitations in pore size and porosity of the porous active layer, but the porous active layer preferably has a pore size of 0.001 to 10 *µ*m and a porosity of 5 to 95 %. The active layer serve as a resistant layer if the pore size and the porosity of the porous active layer is less than 0.001 *µ*m and 5 %, respectively, while mechanical properties of the electrode including a porous active layer may be degraded if the pore size and the porosity of the porous active layer is greater than 150 *µ*m and 95 %, respectively.

In addition to the inorganic particles and the polymer, the porous active layer according to the present invention may further include other additives.

The electrode including a porous active layer according to the present invention may be manufactured according to conventional methods well known in the art. For example, a binder polymer is dissolved in a solvent to prepare a polymer solution, and inorganic particles are added and dispersed to the polymer solution, and then the weak region vulnerable to electrical short circuit is coated with the resultant polymer solution including the inorganic particles dispersed therein, and dried to prepare an electrode.

The solvent having a solubility parameter similar to that of the polymer as well as a low boiling point is preferred. This is why the solvent is uniformly mixed with the polymer and removed easily after coating the polymer. A non-limiting example of the solvent that may be used include, but is not limited to, acetone, tetrahydrofuran, methylene chloride, chloroform, dimethylformamide, N-methyl-2-pyrrolidone (NMP), cyclohexane, water and mixtures thereof.

When the electrode is manufactured according to the present invention, it is preferred to perform a step of pulverizing inorganic particles after adding the inorganic particles to the binder polymer solution. At this time, the time required for pulverization suitably ranges from 1 to 20 hours, and the particle size of the pulverized particles ranges preferably from 0.001 and 10 *µ*m. Conventional pulverization methods, particularly preferably a method using a ball mill may be used. In order to coat a weak region vulnerable to short circuit with the mixture of inorganic particles and a polymer, any coating methods known to those skilled in the art may be used herein. As the used coating methods, it is possible to use various processes including dip coating, die coating, roll coating, comma coating or combinations thereof.

Thickness, pore size and porosity of the porous active layer introduced onto the electrode may easily adjusted by adjusting the sizes and contents of the inorganic particles and composition of the polymer with the inorganic particles as the main components of the porous active layer according to the present invention.

That is to say, the porosity of the porous active layer according to the present invention is increased with the increase in a ratio (ratio = I/P) of inorganic particles (I) to a polymer (P), indicating that the porous active layer has an increased thickness even under the same solid contents (inorganic particles + binder polymers, based on the porous active layer). Also, the pore size of the porous active layer is increased with the increase in the possibility of forming pores among the inorganic particles. At this time, the pore size of the porous active layer is increased since interstitial distances among the inorganic particles are increased with the increase in the size (particle diameter) of the inorganic particles. For example, if inorganic particles having a particle diameter of 1 *µ*m or less are used, the resultant pores are also formed in a size of 1 *µ*m or less. The pores will be later filled with an electrolyte solution, and such an electrolyte solution serves to transfer lithium ions. Accordingly, the electrode including a porous active layer according to the present invention has an advantage that it is possible to convert a dead space, through which lithium ions may not generally move, to an active space through which lithium ions may generally move.

In the porous active layer formed to show heterogeneity of composition morphology toward a thickness direction, the content ratio of the polymer present in a surface of the porous active layer is higher than that of the polymer present inside the porous active layer, and a content ratio of the inorganic particles present in a surface of the porous active layer is lower than that of the inorganic particles present inside the porous active layer, as shown in FIG. 1A and FIG. 2A. Accordingly, the porous active layer has increased resistance to external stimuli such as improved peeling resistance and scratch resistance, and an improved lamination characteristic to a separator due to adhesion characteristic of the polymer present in the surface of the active layer. Therefore, the porous active layer of the present invention may exhibit very excellent characteristics in the assembly process of a battery such a winding process and a lamination process. Also, the porous active layer of the present invention may have excellent ion conductivity since the heterogeneity of morphology toward a thickness direction enables the porosity of the active layer to become increased from its surface to its inside, thereby resulting in improved battery performances.

In the application of the present invention, the expression "heterogeneity of morphology toward thickness direction in which a content ratio of binder polymer/inorganic particles present in a surface region of a porous active layer is higher than that of binder polymer/inorganic particles present inside the porous active layer" should be understood to include all aspects if the porous active layer is formed so that a content ratio of binder polymer/inorganic particles present in a surface of the porous active layer is higher than that of binder polymer/inorganic particles present beneath (inside) the surface of the porous active layer. For example, by the expression, it is meant that the porous active layer includes all porous active layers formed so that the content ratio of the binder polymer/inorganic particles is linearly decreased toward a direction from a surface of the porous active layer to the electrode; a porous active layer formed so that the content ratio of the binder polymer/inorganic particles is non-linearly decreased toward a direction from a surface of the porous active layer to the electrode; and a porous active layer formed so that the content ratio of the binder polymer/inorganic particles is non-continuously decreased toward a direction from a surface of the porous active layer to the electrode.

In the application of the present invention, the content ratio of the binder polymer/inorganic particles is determined on the basis of the entire surface region of the porous active layer since the binder polymer present in the surface region of the porous active layer may not be partially homogenously mixed with the inorganic particles.

As one of the major components in the porous coating layer having heterogeneous composition morphology according to one embodiment of the present invention, a first binder polymer is preferably used as the binder polymer, the first binder polymer including together at least one functional group selected from the group consisting of carboxy, maleic anhydride and hydroxy; and at least one functional group selected from the group consisting of cyano and acrylate. More preferably, first binder polymers containing a hydroxy group and a cyano group together, such as cyanoethylpullulan, cyanoethylpolyvinylalcohol, cyanoethylcellulose, cyanoethylsucrose, are used alone or in combinations thereof. If a coating solution using the first binder polymer having two predetermined functional groups is used herein, the porous active layer having heterogeneity of morphology toward a thickness direction is easily manufactured by only a single coating by means of control of phase inversion, and a cohesion force among the inorganic particles, an adhesion force between the porous active layer and the porous substrate and a lamination characteristic to electrodes are further improved.

Also, the above mentioned first binder polymer is preferably used in combination with a second binder polymer having a solubility parameter of 17 to 27MPa^{1/2} in the aspect of electrochemical safety of the porous coating layer. Such a second binder polymer includes polymers having a functional group selected from the group consisting of halogen, acrylate, acetate and cyano. More particularly, an example of the second binder polymer includes polyvinylidene fluoride-co-hexafluoropropylene, polyvinylidene fluoride-co-trichloroethylene, polymethylmethacrylate, polyacrylonitrile, polyvinylpyrrolidone, polyvinylacetate, polyethylene-co-vinyl acetate, polyimide, polyethylene oxide, cellulose acetate, cellulose acetate butyrate, cellulose acetate propionate, etc.

If the first binder polymer and the second binder polymer are used together in the porous active layer having homogeneous composition morphology according to the present invention, a content ratio of the first binder polymer : the second binder polymer ranges from 0.1 : 99.9 to 99.9 : 0.1, and more preferably from 20.0 : 80.0 to 80.0 : 20.0.

The electrode including a porous active layer having heterogeneity of composition morphology toward a thickness direction according to the present invention may be manufactured according to the following methods, but the present invention is not limited thereto.

As the first method, a method for manufacturing an electrode having a coating layer is described, as follows. In this manufacturing method, the coating layer is formed so that a content ratio of binder polymer/inorganic particles is non-continuously decreased from a surface of porous active layer toward the porous substrate.

First, a binder polymer is dissolved in a solvent to form a polymer solution, and inorganic particles are added and dispersed in the polymer solution to prepare various coating solutions having different contents of the inorganic particles. At this time, kinds of the binder polymer and the inorganic particles may be same or different in each of the coating solutions. A porous active layer having heterogeneity of morphology toward a thickness direction is prepared by repeatedly applying and drying each of the coating solutions on a surface of the weak region vulnerable to short circuit with a thin thickness, wherein the binder polymer/inorganic particles have different content ratios in the coating solutions. Binder polymer/inorganic particles in a finally applied coating solution should have a sufficiently high content ratio to improve characteristics of a battery during an assembly process of the battery. Then, binder polymer/inorganic particles in the coating solution, applied beneath the finally applied coating solution, should have a lower content ratio than that of binder polymer/inorganic particles present in the coating solution in a surface of the porous active layer. Meanwhile, binder polymers/inorganic particles in the coating solution, with which a surface of the weak region vulnerable to short circuit is coated so that the surface can be in contact to the coating solution, may have a higher content ratio than that of binder polymer/inorganic particles present in the coating solution of the intermediate layer. Such a non-continuous multiple coating layer may be formed of 2 layers, 3 layers or more, and the entire thickness of the multiple coating layer should be controlled within the known range so that the performances of the coating layer cannot be degraded.

All conventional binder polymers may be used as the binder polymer capable of being used to form the above-mentioned multiple coating layer, as long as they can be used to form a porous active layer. In particular, the binder polymer is preferably gelled when swelled with a liquid electrolyte, thereby to shows a high degree of swelling.

As the second method, there is a method for forming a porous active layer having heterogeneity of morphology toward a thickness direction through a single coating process.

First, the above-mentioned first binder polymer is dissolved in a solvent to prepare a first polymer solution. The first binder polymer includes together at least one functional group selected from the group consisting of carboxy, maleic anhydride and hydroxy; and at least one functional group selected from the group consisting of cyano and acrylate. Therefore, physical properties of the resultant organic/inorganic composite separator may be improved, resulting in control of the phase inversion.

Subsequently, inorganic particles are added and dispersed in a first binder polymer solution.

Then, a weak region vulnerable to short circuit is coated with a solution of a first binder polymer having inorganic particles dispersed therein, and the coated region is then dried. Here, the heterogeneity of morphology toward a thickness direction is determined according to components and coating conditions of the binder polymer. That is to say, the heterogeneity of morphology in the porous active layer is formed according to the components and the suitable coating condition (in particular, moisture) of the binder polymer. If a polymer having a high polarity, for example the first binder polymer, is mixed with inorganic materials to prepare a mixed solution of the binder polymer/inorganic particles and the weak region vulnerable to short circuit is then coated with the mixed solution under a suitable moisture condition, the polymer solution goes through phase inversion so that the polymer having a high polarity is present in a surface of the porous active layer. That is to say, a relative density of the binder polymer is gradually decreased toward a thickness direction of the active layer. At this time, the moisture condition, required for coating the porous substrate, ranges from 5 to 80 % (a relative moisture, room temperature), and preferably from 20 to 50 %.

The heterogeneity of morphology in the active layer is not accomplished if the moisture condition is less than 5 %, while the formed active layer has a very poor adhesion force and an excessively high porosity if the moisture condition is greater than 80 %, resulting in easy peeling of the active layer.

In order to improve electrochemical stability of a porous active layer to be formed, it is preferred to further dissolve a second binder polymer having a solubility parameter of 17 to 27MPa^{1/2} in the above-mentioned first binder polymer solution. Specific kinds and preferred content ratios of the first binder polymer and the second binder polymer are the same as described above.

As described above, an electrode including the porous active layer may be used as a cathode, an anode or both electrodes of the lithium secondary battery.

Examples of the lithium secondary battery include a lithium metal secondary battery, a lithium ion secondary battery, a lithium polymer secondary battery and a lithium ion polymer secondary battery.

The battery may be manufactured according to conventional methods well known to the art, for example, by interposing a separator between a cathode and an anode and injecting an electrolyte solution into a battery.

There is no limitation in the electrodes of the present invention including a porous active layer, and the electrodes may be manufactured by settling electrode active materials on a current collector according to one of the conventional methods known to one skilled in the art.

Among the electrode active materials, a non-limiting example of cathode active materials may include any conventional cathode active materials currently used in a cathode of a conventional electrochemical device, and particularly preferably includes lithium manganese oxides, lithium cobalt oxides, lithium nickel oxides, lithium iron oxides or lithium composite oxides thereof.

Additionally, a non-limiting example of anode active materials may include any conventional anode active materials currently used in an anode of a conventional electrochemical device, and particularly preferably include lithium intercalation materials such as lithium metal, lithium alloys, carbon, petroleum coke, activated carbon, graphite or other carbonaceous materials. A non-limiting example of a cathode current collector includes foil formed of aluminum, nickel or a combination thereof. A non-limiting example of an anode current collector includes foil formed of copper, gold, nickel, copper alloys or a combination thereof.

The electrolyte that may be used in the present invention includes a salt represented by the formula of A⁺B⁻, wherein A⁺ represents an alkali metal cation selected from the group consisting of Li⁺, Na⁺, K⁺ and combinations thereof, and B⁻ represents an anion selected from the group consisting of PF₆⁻, BF4⁻, Cl⁻, Br⁻, I⁻, Cl0₄⁻, AsF₆⁻, CH₃CO₂⁻, CF₃SO₃⁻, N(CF₃SO₂)₂⁻, C(CF₂SO₂)₃⁻ and combinations thereof, the salt being dissolved or dissociated in an organic solvent selected from the group consisting of propylene carbonate (PC), ethylene carbonate (EC), diethyl carbonate (DEC), dimethyl carbonate (DMC), dipropyl carbonate (DPC), dimethyl sulfoxide, acetonitrile, dimethoxyethane, diethoxyethane, tetrahydrofuran, N-methyl-2-pyrrolidone (NMP), ethylmethyl carbonate (EMC), gamma-butyrolactone (y-butyrolactone) and mixtures thereof. However, the electrolyte that may be used in the present invention is not limited to the above examples.

There is no particular limitation in porous materials used for the separator, as long as they serve to prevent internal short circuit and to be swelled with an electroiyte solution. A non-limiting example of the porous materials includes a polypropylene, polyethylene, polyolefin porous separator or a composite porous separator, etc., wherein the composite porous separator is obtained by adding inorganic materials to the porous separator.

There is no limitation in the external shape of the battery manufactured according to the above methods, but the external shape of the battery may be in a cylindrical shape using a can, a square shape, a pouch shape or a coin shape.

A general winding process, a stacking process and a folding process may be used as the process using the electrode including the porous active layer of the present invention, wherein the stacking process is laminating the electrode on a separator.

Hereinafter, preferred embodiments of the present invention will be described in detail for better understandings, with reference to the accompanying drawings. However, the description proposed herein is just a preferable example for the purpose of illustrations only, not intended to limit the scope of the invention.

### Example 1: Protection of Edge Region of Electrode

### 1-1. Manufacture of Electrode

### (Manufacture of Anode)

To N-methyl-2-pyrrolidone (NMP) as a solvent, 96 % by weight of carbon powder as an anode active material, 3 % by weight of PVDF (polyvinylidene fluoride) as a binder and 1 % by weight of carbon black as a conductive agent were added to prepare a mixed slurry for an anode. A Cu thin film having a thickness of 10 *µ*m as an anode collector was coated with the mixed slurry using an intermittent coating process, and dried to prepare an anode. Then, the anode was subject to a roll press.

### (Manufacture of Cathode)

To N-methyl-2-pyrrolidone (NMP) as a solvent, 92 % by weight of lithium cobalt composite oxide (LiCoO₂) as a cathode active material, 4 % by weight of carbon black as a conductive agent and 4 % by weight of PVDF (polyvinylidene fluoride) as a binder were added to prepare a mixed slurry for a cathode. An Al thin film having a thickness of 20 *µ*m as a cathode collector was coated with the mixed slurry using an intermittent coating process, and dried to prepare a cathode. Then, the cathode was subject to a roll press.

### (Coating of Boundary Region of Intermittently Coated Electrode Active Material Pattern with Porous Active Layer)

10 % by weight of PVdF-CTFE (polyvinylidene fluoride-chlorotrifluoroethylene copolymer) and 2 % by weight of cyanoethylpullulan were added to acetone and dissolved therein at 50 °C for about 12 hours or more to prepare a polymer solution. To the polymer solution obtained as described above, BaTiO₃ powder was added in a weight ratio of 20/80 weight ratio of the polymer mixture / BaTiO₃. Then, the BaTiO₃ powder was pulverized and dispersed for at least 12 hours using a ball mill method to prepare a slurry. In the slurry obtained as described above, a particle size of BaTiO₃ can be controlled depending on the size (particle size) of beads used in the ball mill method and the ball milling time. In this Example 1, the BaTiO₃ powder was pulverized with a particle size of about 400 nm to provide a slurry. Then, a porous active material layer was introduced into edge regions (namely, edge regions of an electrode intermittently coated with an active material and arranged right before a region which is not coated with an active material) of the cathode and the anode, prepared using the intermittent coating (pattern coating) process, by coating the edge regions of the cathode and the anode with the prepared slurry composed of a binder polymer and inorganic particles. At this time, the prepared slurry was introduced onto the intermittently coated edge regions with a thickness of 10 um and a coating width of 2 cm.

### 1-2. Manufacture of Lithium Secondary Battery

The anode, the cathode and the separator, which are coated with the porous active layer of Example 1, were wound to form an assembly. Then, a liquid electrolyte (ethylene carbonate (EC)/ethylene methyl carbonate (EMC) = 1/2 (by volume ratio) containing 1 M of lithium hexafluorophosphate (LiPF₆)) was injected into the battery assembly to prepare a lithium secondary battery.

### Example 2

Example 1 was repeated to prepare a lithium secondary battery, except that a boundary region of the collector which is not coated with the electrode active material was coated with the slurry composed of a binder polymer and inorganic particles, prepared in Example 1, under a moisture condition of 30 % relative humidity.

### Comparative example 1

Example 1 was repeated to prepare an electrode and a lithium secondary battery, except that the intermittently coated edge regions were taped in a width of 2 cm with a polyimide tape having a thickness of 100 um instead of the porous active layer.

### Experimental example 1. Evaluation for Safety of Electrode

In order to evaluate safety of the electrode including a porous active layer according to the present invention, a test was carried out, as described in the following.

One electrode was artificially piled up on another electrode so that edge regions of the intermittently coated electrodes are in direct contact with each other, and then an electrical current was applied to the piled-up electrodes to measure electrical resistance.

As a result, it was revealed that the resistance of the electrode prepared in Example 1 is not changed, indicating that short circuit is not caused even if the edge regions of the intermittently coated electrodes are in direct contact with each other.

### Experimental example 2. Evaluation for Performance of Lithium Secondary Battery

In order to evaluate capacity of a lithium secondary battery having an electrode including a porous active layer according to the present invention, a test was carried out, as described in the following.

The lithium secondary battery prepared in Example 1 was used herein, wherein the lithium secondary battery includes an electrode whose edge region, which is intermittently coated with the electrode active material, is protected with a porous active layer. And, the lithium secondary battery prepared in Comparative example 1 was used as a control, wherein the lithium secondary battery includes an electrode whose edge region, which is intermittently coated with the electrode active material, is covered with a conventional tape.

It was revealed that capacity of the battery prepared in Comparative example 1 is significantly reduced due to the presence of the tape with a thickness of about 100 *µ*m and the reduction in the capacity of a battery as much as the region covered with the tape (see Table 1). On the contrary, it was seen that capacity of the lithium secondary battery prepared in Example 1 is not substantially reduced (see Table 1). This indicates that deterioration in the performances of the battery is minimized because the intermittently coated regions take part in intercalation and deintercalation of lithium ions due to the porous active layer with a thin coating thickness of 10 *µ*m, the presence of the binder polymer and the unique porosity of the porous active layer.

**Table 1**

| | Designed Capacity (mAh) | Measured Capacity (mAh) |
|---|---|---|
| Example 1 | 2400 | 2398 |
| Comparative example 1 | 2400 | 2350 |

### INDUSTRIAL APPLICABILITY

The electrode of the present invention may be useful to improve safety of a battery by coating non-coated regions of the electrode or boundary regions of the intermittently pattern-coated electrodes with a porous active layer to prevent internal short circuit caused by the contact between both electrodes, and also to minimize reduction in the capacity of a battery due to the introduction of the porous active layer since lithium ions are easily passed through the porous structure, wherein the boundary regions are formed by the intermittent coating with the electrode active material.

## Claims

1. A lithium secondary battery comprising a cathode, an anode and an electrolyte, wherein the cathode, the anode or both electrodes comprise(s) a current collector intermittently pattern-coated with an electrode active material, and non-coated regions and boundary regions of the intermittently pattern-coated electrode(s) are coated with a porous active layer comprising a mixture of inorganic particles having a diameter of 0.001 to 10 µm and a binder polymer;
**characterised in that** the porous active layer has a heterogeneous composition morphology in the thickness direction such that the ratio of the binder polymer content to the inorganic particles content in a surface region of the porous active layer is higher than that inside the porous active layer beneath the surface region.

2. A lithium secondary battery according to Claim 1, wherein the binder polymer interconnects and fixes the inorganic particles and pores are formed in the porous active layer due to the presence of interstitial volumes among the inorganic particles.

3. A lithium secondary battery according to Claim 1, wherein the inorganic particles are selected from (a) inorganic particles having a dielectric constant of 5 or more, (b) inorganic particles having lithium ion conductivity, and (c) a mixture thereof.

4. A lithium secondary battery according to Claim 3, wherein the inorganic particles having a dielectric constant of 5 or more are selected from BaTiO₃, Pb(Zr,Ti)O₃ (PZT), Pb₁-ₓLaₓZr_{1-y}Ti_{y}O₃ (PLZT), Pb (Mg₃Nb_{2/3})O₃PbTiO₃ (PMN-PT), hafnia (HfO₂), SrTiO₃, SnO₂, CeO₂, MgO, NiO, CaO, ZnO, ZrO₂, SiO₂, Y₂O₃, Al₂O₃, SiC, TiO₂ and mixtures thereof; and
wherein the inorganic particles having lithium ion conductivity are selected from lithium phosphate (Li₃PO₄), lithium titanium phosphate (LiₓTi_{y} (PO₄)₃, 0 < x < 2, 0 < y < 3), lithium aluminium titanium phosphate (LiₓAl_{y}Ti_{z} (PO₄)₃, 0 < x < 2, 0 < y < 1, 0 < z < 3), (LiAlTiP)ₓO_{y} type glass (0 < x < 4, 0 < y < 13), lithium lanthanum titanate (LiₓLa_{y}TiO₃, 0 < x < 2, 0 < y < 3), lithium germanium thiophosphate (LiₓGe_{y}P_{z}S_{w}, 0 < x < 4, 0 < y < 1, 0 < z < 1, 0 < w < 5), lithium nitride (LiₓN_{y}, 0 < x < 4, 0 < y < 2), SiS₂ (LiₓSi_{y}S₂, 0 < x < 3, 0 < y < 2, 0 < z < 4) type glass, P₂S₅ (LiₓP_{y}S_{z}, 0 < x < 3, 0 < y < 3, 0 < z < 7) type glass and mixtures thereof.

5. A lithium secondary battery according to Claim 4, wherein the inorganic particles having a dielectric constant of 5 or more are selected from BaTiO₃, Pb(Zr,Ti)O₃ (PZT), Pb₁₋ₓLaₓZr_{1-y}Ti_{y}O₃(PLZT), Pb(Mg₃Nb_{2/3}) O₃-PbTiO₃ (PMN-PT), hafnia (HfO₂) and mixtures thereof.

6. A lithium secondary battery according to Claim 1, wherein the binder polymer has a solubility parameter of 15 to 45 MPa^{1/2}.

7. A lithium secondary battery according to Claim 1, wherein the binder polymer is selected from polyvinylidene fluoride-co-hexafluoropropylene, polyvinylidene fluoride-co-trichloroethylene, polymethylmethacrylate, polyacrylonitrile, polyvinylpyrrolidone, polyvinylacetate, polyethylene-co-vinyl acetate, polyimide, polyethylene oxide, cellulose acetate, cellulose acetate butyrate, cellulose acetate propionate, pullulan, carboxyl methyl cellulose, polyvinylalcohol, cyanoethylpullulan, cyanoethylpolyvinylalcohol, cyanoethylcellulose, cyanoethylsucrose and mixtures thereof.

8. A lithium secondary battery according to Claim 1, wherein the ratio of the inorganic particles content to the binder polymer content ranges from 10:90 to 99:1.

9. A lithium secondary battery according to Claim 1, wherein the porous active layer has a pore size of 0.001 to 10 µm and a porosity of 5 to 95 %.

10. A lithium secondary battery according to Claim 1, wherein the porous active layer has a thickness of 0.001 to 100 µm.

11. A lithium secondary battery according to Claim 1, wherein the binder polymer comprises a first binder polymer containing at least one functional group selected from carboxy, maleic anhydride and hydroxyl groups, and at least one functional group selected from cyano and acrylate groups.

12. A lithium secondary battery according to Claim 11, wherein the first binder polymer contains a hydroxy group and a cyano group.

13. A lithium secondary battery according to Claim 12, wherein the first binder polymer is selected from cyanoethylpullulan, cyanoethylpolyvinylalcohol, cyanoethylcellulose, cyanoethylsucrose and mixtures thereof.

14. A lithium secondary battery according to Claim 11, wherein the binder polymer further comprises a second binder polymer having a solubility parameter of 17 to 27 MPa^{1/2}.

15. A lithium secondary battery according to Claim 14, wherein the second binder polymer contains a functional group selected from halogen, acrylate, acetate and cyano groups.

16. A lithium secondary battery according to Claim 15, wherein the second binder polymer is selected from polyvinylidene fluoride-co-hexafluoropropylene, polyvinylidene fluoride-co-trichloroethylene, polymethylmethacrylate, polyacrylonitrile, polyvinylpyrrolidone, polyvinylacetate, polyethylene-co-vinyl acetate, polyimide, polyethylene oxide, cellulose acetate, cellulose acetate butyrate and cellulose acetate propionate.

17. A lithium secondary battery according to Claim 14, wherein the ratio of the first binder polymer content to the second binder polymer content ranges from 0.1:99.9 to 99.9:0.1.

## Patentansprüche

1. Lithiumsekundärbatterie, umfassend eine Kathode, eine Anode und einen Elektrolyt, wobei die Kathode, die Anode oder beide Elektroden einen Stromkollektor umfasst/umfassen, der in Abständen rasterförmig mit einem aktiven Elektrodenmaterial beschichtet ist, und nicht beschichtete Bereiche und Grenzbereiche des/der in Abständen rasterförmig beschichteten Elektrode(n) mit einer porösen aktiven Schicht beschichtet sind, die eine Mischung aus anorganischen Partikeln mit einem Durchmesser von 0,001 bis 10 µm und einem Bindemittelpolymer umfasst;
**dadurch gekennzeichnet, dass** die poröse aktive Schicht eine Morphologie mit heterogener Zusammensetzung in Dickenrichtung aufweist, so dass das Verhältnis des Bindemittelpolymergehalts zu dem Gehalt der anorganischen Partikel in einem Oberflächenbereich der porösen aktiven Schicht höher ist als innerhalb der porösen aktiven Schicht unterhalb des Oberflächenbereichs.

2. Lithiumsekundärbatterie gemäß Anspruch 1, wobei das Bindemittelpolymer die anorganischen Partikel miteinander verbindet und fixiert und aufgrund der Gegenwart von Zwischenvolumen zwischen den anorganischen Partikeln Poren in der porösen aktiven Schicht gebildet sind.

3. Lithiumsekundärbatterie gemäß Anspruch 1, wobei die anorganischen Partikel ausgewählt sind aus (a) anorganischen Partikeln mit einer dielektrischen Konstante von 5 oder mehr, (b) anorganischen Partikeln mit einer Lithiumionenleitfähigkeit und (c) einer Mischung davon.

4. Lithiumsekundärbatterie gemäß Anspruch 3,
wobei die anorganischen Partikel mit einer dielektrischen Konstante von 5 oder mehr aus BaTiO₃, Pb(Zr,Ti)O₃ (PZT), Pb₁₋ₓLaₓZr_{1-y}Ti_{y}O₃ (PLZT),
Pb(Mg₃Nb_{2/3})O₃-PbTiO₃ (PMN-PT), Hafniumoxid (HfO₂), SrTiO₃, SnO₂, CeO₂, MgO, NiO, CaO, ZnO, ZrO₂, SiO₂, Y₂O₃, Al₂O₃, SiC, TiO₂ und Mischungen davon ausgewählt sind, und
wobei die anorganischen Partikel mit Lithiumionenleitfähigkeit aus Lithiumphosphat (Li₃PO₄), Lithiumtitanphosphat (LiₓTi_{y} (PO₄)₃, O < x < 2,
O < y < 3), Lithiumaluminiumtitanphosphat (LiₓAl_{y}Ti_{z} (PO₄)₃, 0 < x < 2, 0 < y < 1,0 < z < 3), LiAlTiP)ₓO_{y}, Glas-Typ (0 < x 4, 0 < y 13), Lithiumlanthantitanat (LiₓLa_{y}TiO₃, 0 < x < 2, 0 < y < 3),
Lithiumgermaniumthiophosphat (LiₓGe_{y}P_{z}S_{w}, 0 < x < 4, 0 < y < 1, 0 < z < 1, 0 < w < 5), Lithiumnitrid (LiₓN_{y}, 0 < x < 4, 0 < y < 2), SiS₂ (LiₓSi_{y}S₂, 0 < x < 3, 0 < y < 2, 0 < z < 4)-Glas-Typ, P₂S₅ (LiₓP_{y}S_{z}, 0 < x < 3, 0 < y < 3, 0 < z < 7)-Glas-Typ und Mischungen davon ausgewählt sind.

5. Lithiumsekundärbatterie gemäß Anspruch 4, wobei die anorganischen Partikel mit einer dielektrischen Konstante von 5 oder mehr aus BaTiO₃, Pb(Zr,Ti)O₃ (PZT), Pb₁₋ₓLaₓZr_{1-y}Ti_{y}O₃ (PLZT), Pb(Mg₃Nb_{2/3})O₃-PbTiO₃ (PMN-PT), Hafniumoxid (HfO₂) und Mischungen davon ausgewählt sind.

6. Lithiumsekundärbatterie gemäß Anspruch 1, wobei das Bindemittelpolymer einen Löslichkeitsparameter von 15 bis 45 MPa^{1/2} aufweist.

7. Lithiumsekundärbatterie gemäß Anspruch 1, wobei das Bindemittelpolymer aus Polyvinylidenfluorid-co-hexafluorpropylen, Polyvinylidenfluorid-co-trichlorethylen, Polymethylmethacrylat, Polyacrylonitril, Polyvinylpyrrolidon, Polyvinylacetat, Polyethylencovinylacetat, Polyimid, Polyethylenoxid, Celluloseacet, Celluloseacetatbutyrat, Celluloseacetatpropionat, Pullulan, Carboxylmethylcellulose, Polyvinylalkohol, Cyanoethylpullulan, Cyanoethylpolyvinylalkohol, Cyanoethylcellulose, Cyanoethylsaccharose und Mischungen davon ausgewählt ist.

8. Lithiumsekundärbatterie gemäß Anspruch 1, wobei das Verhältnis des Gehalts der anorganischen Partikel zu dem Bindemittelpolymergehalt von 10:90 bis 99:1 reicht.

9. Lithiumsekundärbatterie gemäß Anspruch 1, wobei die poröse aktive Schicht eine Porengröße von 0,001 bis 10 µm und eine Porosität von 5 bis 95 % % aufweist.

10. Lithiumsekundärbatterie gemäß Anspruch 1, wobei die poröse aktive Schicht eine Dicke von 0,001 bis 100 µm aufweist.

11. Lithiumsekundärbatterie gemäß Anspruch 1, wobei das Bindemittelpolymer ein erstes Bindemittelpolymer umfasst, das mindestens eine funktionelle Gruppe, ausgewählt aus Carboxy-, Maleinsäureanhydrid- und Hydroxylgruppen, und mindestens eine funktionelle Gruppe, ausgewählt aus Cyano- und Acrylat-Gruppen, enthält.

12. Lithiumsekundärbatterie gemäß Anspruch 11, wobei das erste Bindemittelpolymer eine Hydroxygruppe und eine Cyanogruppe enthält.

13. Lithiumsekundärbatterie gemäß Anspruch 12, wobei das erste Bindemittelpolmyer aus Cyanoethylpullulan, Cyanoethylpolyvinylalkohol, Cyanoethylcellulose, Cyanoethylsaccharose und Mischungen davon ausgewählt ist.

14. Lithiumsekundärbatterie gemäß Anspruch 11, wobei das Bindemittelpolymer ferner ein zweites Bindemittelpolymer mit einem Löslichkeitsparameter von 17 bis 27 MPa^{1/2} umfasst.

15. Lithiumsekundärbatterie gemäß Anspruch 14, wobei das zweite Bindemittelpolymer eine funktionelle Gruppe enthält, die aus Halogen-, Acrylat-, Acetat- und CyanoGruppen ausgewählt ist.

16. Lithiumsekundärbatterie gemäß Anspruch 15, wobei das zweite Bindemittelpolymer aus Polyvinylidenfluorid-co-hexafluorpropylen, Polyvinylidenfluorid-co-trichlorethylen, Polymethylmethacrylat, Polyacrylonitril, Polyvinylpyrrolidon, Polyvinylacetat, Polyethylencovinylacetat, Polyimid, Polyethylenoxid, Celluloseacetat, Celluloseacetatbutyrat und Celluloseacetatpropionat ausgewählt ist.

17. Lithiumsekundärbatterie gemäß Anspruch 14, wobei das Verhältnis des Gehalts des ersten Bindemittelpolymers zu dem Gehalt des zweiten Bindemittelpolymers von 0,1:99,9 bis 99,9:0,1 reicht.

## Revendications

1. Batterie secondaire au lithium comprenant une cathode, une anode et un électrolyte, dans laquelle la cathode, l'anode ou les deux électrodes comprennent un collecteur de courant recouvert de motifs de façon intermittente avec une matière active d'électrode, et des régions non recouvertes et des régions limites de l'(des) électrode(s) recouverte(s) de motifs de façon intermittente sont recouvertes d'une couche active poreuse comprenant un mélange de particules inorganiques ayant un diamètre de 0,001 à 10 µm et d'un polymère liant ;
**caractérisée en ce que** la couche active poreuse a une morphologie de composition hétérogène dans la direction d'épaisseur de sorte que le rapport de la teneur en polymère liant sur la teneur en particules inorganiques dans une région de surface de la couche active poreuse est supérieur à celui à l'intérieur de la couche active poreuse au-dessous de la région de surface.

2. Batterie secondaire au lithium selon la revendication 1, dans laquelle le polymère liant interconnecte et fixe les particules inorganiques et des pores sont formés dans la couche active poreuse en raison de la présence de volumes interstitiels entre les particules inorganiques.

3. Batterie secondaire au lithium selon la revendication 1, dans laquelle les particules inorganiques sont sélectionnées à partir (a) de particules inorganiques ayant une constante diélectrique de 5 ou plus, (b) de particules inorganiques ayant une conductivité d'ions lithium, et (c) d'un mélange de celles-ci.

4. Batterie secondaire au lithium selon la revendication 3, dans laquelle les particules inorganiques ayant une constante diélectrique de 5 ou plus sont sélectionnées à partir de BaTiO₃, Pb(Zr, Ti)O₃ (PZT), de Pb₁₋ₓLaₓZr_{1-y}Ti_{y}O₃ (PLZT), de Pb(Mg₃Nb_{2/3})O₃-PbTiO₃ (PMN-PT), d'oxyde de hafnium (HfO₂), de SrTiO₃, de SnO₂, de CeO₂, de MgO, de NiO, de CaO, de ZnO, de ZrO₂, de SiO₂,d'Y₂O₃, d'Al₂O₃, de SiC, de TiO₂ et de mélanges de ceux-ci ; et
dans laquelle les particules inorganiques ayant une conductivité d'ions lithium sont sélectionnées à partir de phosphate de lithium (Li₃PO₄), de phosphate de lithium titane (LiₓTi_{y} (PO₄)₃, 0 < x < 2, 0 < y < 3), de phosphate de lithium aluminium titane (LiₓAl_{y}Ti_{z} (PO₄)₃, 0 < x < 2, 0 < y < 1, 0 < z < 3), de verre de type (LiAlTiP)ₓO_{y} (0 < x < 4, 0 < y < 13), de titanate de lithium lanthane (LiₓLa_{y}TiO₃, 0 < x < 2, 0 < y < 3), de thiophosphate de lithium germanium (LiₓGe_{y}P_{z}S_{w}, 0 < x < 4, 0 < y < 1, 0 < z < 1, 0 < w < 5), de nitrure de lithium (LiₓN_{y}, 0 < x < 4, 0 < y < 2), de verre de type SiS₂ (LiₓSi_{y}S₂, 0 < x < 3, 0 < y < 2, 0 < z < 4), de verre de type P₂S₅ (LiₓP_{y}S_{z}, 0 < x < 3, 0 < y < 3, 0 < z < 7) et de mélanges de ceux-ci.

5. Batterie secondaire au lithium selon la revendication 4, dans laquelle les particules inorganiques ayant une constante diélectrique de 5 ou plus sont sélectionnées à partir de BaTiO₃, de Pb(Zr, Ti)O₃ (PZT), de Pb₁₋ₓLaₓZr_{1-y}Ti_{y}O₃ (PLZT), de Pb(Mg₃Nb_{2/3})O₃-PbTiO₃ (PMN-PT), d'oxyde de hafnium (HfO₂) et de mélanges de ceux-ci.

6. Batterie secondaire au lithium selon la revendication 1, dans laquelle le polymère liant a un paramètre de solubilité de 15 à 45 MPa^{1/2}.

7. Batterie secondaire au lithium selon la revendication 1, dans laquelle le polymère liant est sélectionné à partir de poly(fluorure de vinylidène-co-hexafluoropropylène), de poly(fluorure de vinylidène-co-trichloréthylène), de polyméthacrylate de méthyle, de polyacrylonitrile, polyvinylpyrrolidone, d'acétate de polyvinyle, d'acétate de polyéthylène-co-vinyle, de polyimide, d'oxyde de polyéthylène, d'acétate de cellulose, d'acétate butyrate de cellulose, d'acétate propionate de cellulose, de pullulane, de carboxyméthylcellulose, d'alcool polyvinylique, de pullulane cyanoéthylé, d'alcool polyvinylique cyanoéthylé, de cellulose cyanoethylée, de sucrose cyanoéthylé et de mélanges de ceux-ci.

8. Batterie secondaire au lithium selon la revendication 1, dans laquelle le rapport de la teneur en particules inorganiques sur la teneur en polymère liant s'étale de 10:90 à 99:1.

9. Batterie secondaire au lithium selon la revendication 1, dans laquelle la couche active poreuse a une taille de pore de 0,001 à 10 µm et une porosité de 5 à 95 %.

10. Batterie secondaire au lithium selon la revendication 1, dans laquelle la couche active poreuse a une épaisseur de 0,001 à 100 µm.

11. Batterie secondaire au lithium selon la revendication 1, dans laquelle le polymère liant comprend un premier polymère liant contenant au moins un groupe fonctionnel sélectionné à partir de groupes carboxy, anhydride maléique et hydroxyle, et au moins un groupe fonctionnel sélectionné à partir de groupes acrylate et cyano.

12. Batterie secondaire au lithium selon la revendication 11, dans laquelle le premier polymère liant contient un groupe hydroxy et un groupe cyano.

13. Batterie secondaire au lithium selon la revendication 12, dans laquelle le premier polymère liant est sélectionné à partir de pullulane cyanoéthylé, d'alcool polyvinylique cyanoéthylé, de cellulose cyanoethylée, de sucrose cyanoéthylé et de mélanges de ceux-ci.

14. Batterie secondaire au lithium selon la revendication 11, dans laquelle le polymère liant comprend en outre un second polymère liant ayant un paramètre de solubilité de 17 à 27 MPa^{1/2}.

15. Batterie secondaire au lithium selon la revendication 14, dans laquelle le second polymère liant contient un groupe fonctionnel sélectionné à partir de groupes halogène, acrylate, acétate et cyano.

16. Batterie secondaire au lithium selon la revendication 15, dans laquelle le second polymère liant est sélectionné à partir de poly(fluorure de vinylidène-co-hexafluoropropylène), de poly(fluorure de vinylidène-co-trichloréthylène), de polyméthacrylate de méthyle, de polyacrylonitrile, polyvinylpyrrolidone, d'acétate de polyvinyle, d'acétate de polyéthylène-co-vinyle, de polyimide, d'oxyde de polyéthylène, d'acétate de cellulose, d'acétate butyrate de cellulose et d'acétate propionate de cellulose.

17. Batterie secondaire au lithium selon la revendication 14, dans laquelle le rapport de la teneur en premier polymère liant sur la teneur en second polymère liant s'étale de 0,1:99,9 à 99,9:0,1.
